# EUROPEAN PATENT APPLICATION

(11) **EP 4 645 437 A1**
(43) Date of publication of application: **05.11.2025**
(21) Application number: 25162178.5
(22) Date of filing: 06.03.2025
(51) Int. Cl.: H01M 4/133, H01M 4/134, H01M 4/36, H01M 4/38, H01M 4/485, H01M 4/587, H01M 4/62, H01M 10/0525, H01M 4/02

(54) **NEGATIVE ELECTRODE FOR RECHARGEABLE LITHIUM BATTERY, AND RECHARGEABLE LITHIUM BATTERY INCLUDING THE SAME**

(30) Priority: 30.04.2024 KR 20240057576
(71) Applicant: SAMSUNG SDI CO., LTD., Yongin-si, Gyeonggi-do 17084 (KR)
(72) Inventor: NAM, Hyun, Yongin-si (KR); PARK, Jin Seok, Yongin-si (KR); LEE, Taeil, Yongin-si (KR); PARK, JeongJoo, Yongin-si (KR); LEE, Minho, Yongin-si (KR)
(74) Representative: Marks & Clerk LLP

(57) **Abstract**

Provided are a negative electrode for a rechargeable lithium battery and a rechargeable lithium battery including the same, and a negative electrode for a rechargeable lithium battery including a negative electrode current collector, and a negative electrode active material layer on the negative electrode current collector, wherein the negative electrode active material layer includes a first active material layer, a second active material layer, and a third active material layer, which are sequentially stacked on the negative electrode current collector, the negative electrode active material layer includes a conductive material, and the second active material layer further includes silicon-containing particles.

## Description

### BACKGROUND

Examples of the present disclosure relate to a negative electrode for a rechargeable lithium battery, and a rechargeable lithium battery including the negative electrode, and more particularly, to a multilayer-structured negative electrode and a rechargeable lithium battery including the negative electrode.

The increased use of battery-powered electronics, such as, e.g., mobile phones, laptop computers, and electric vehicles, has increased demand for rechargeable batteries having high energy density and high capacity.

Rechargeable lithium batteries typically include a positive electrode and a negative electrode, each including an active material that allows intercalation and deintercalation of lithium ions, and an electrolyte solution, and produce electrical energy from redox reactions that take place as lithium ions are intercalated into or deintercalated from the positive electrode and the negative electrode.

### SUMMARY

Examples of the present disclosure include a negative electrode for a rechargeable lithium battery, the negative electrode having large capacity and fast charging/discharging rate.

Examples of the present disclosure also include a rechargeable lithium battery having a large capacity and fast charging/discharging rate.

An example embodiment of the present disclosure includes a negative electrode for a rechargeable lithium battery, the negative electrode including a negative electrode current collector, and a negative electrode active material layer on the negative electrode current collector, wherein the negative electrode active material layer includes a first active material layer, a second active material layer, and a third active material layer, which are stacked, e.g., sequentially stacked, on the negative electrode current collector. The negative electrode active material layer includes a conductive material, and the second active material layer further includes silicon-containing particles. With respect to a total amount of the conductive material included in the negative electrode active material layer, a proportion of the conductive material distributed in the second active material layer is greater than a proportion of the conductive material distributed in at least one of (e.g., each) of the first active material layer and the third active material layer.

In an example embodiment of the present disclosure, a negative electrode for a rechargeable lithium battery includes a negative electrode current collector, and a negative electrode active material layer on the negative electrode current collector, wherein the negative electrode active material layer includes a first active material layer, a second active material layer, and a third active material layer, which are stacked, e.g., sequentially stacked, on the negative electrode current collector. The second active material layer may include silicon-containing particles, and the first active material layer may include a first conductive material, the second active material layer may include a second conductive material, and the third active material layer may include a third conductive material. The content of the second conductive material in the second active material layer may be greater than the content of the first conductive material in the first active material layer, and the content of the second conductive material in the second active material layer may be greater than the content of the third conductive material in the third active material layer.

In an example embodiment of the present disclosure, a rechargeable lithium battery includes the negative electrode described above.

At least some of the above and other features of the invention are set out in the claims.

### BRIEF DESCRIPTION OF THE FIGURES

The accompanying drawings are included to provide a further understanding of the present disclosure, and are incorporated in and constitute a part of this specification. The drawings illustrate example embodiments of the present disclosure and, together with the description, serve to explain principles of the present disclosure. In the drawings:
FIG. 1 is a simplified conceptual view showing a rechargeable lithium battery according to example embodiments of the present disclosure;
FIGS. 2 to 5 are cross-sectional views schematically showing a rechargeable lithium battery according to example embodiments of the present disclosure;
FIG. 6 is a cross-sectional view showing a rechargeable lithium battery according to example embodiments of the present disclosure;
FIG. 7 is a cross-sectional view showing a negative electrode according to example embodiments of the present disclosure; and
FIG. 8 is a cross-sectional view for describing the process of preparing a negative electrode according to an example embodiment of the present disclosure.

### DETAILED DESCRIPTION

In order to sufficiently understand the configuration and effects of the present disclosure, example embodiments of the present disclosure will be described with reference to the accompanying drawings. It should be noted, however, that the present disclosure is not limited to the following example embodiments, and may be implemented in various forms and variously modified. The example embodiments herein are provided so that the present disclosure is thorough and fully conveys the scope of the present disclosure to those skilled in the art.

Herein, it will be understood that when a component is referred to as being on another component, the component may be directly on another component, or an intervening third component may be present. In addition, in the drawings, thicknesses of components are exaggerated for effectively describing technical contents. Like reference numerals refer to like elements throughout.

Unless otherwise specified herein, the expression of singular form may include the expression of plural form. In addition, unless otherwise specified, the phrase "A or B" may indicate "A but not B," "B but not A," or "A and B." The terms "comprises" and/or "comprising" used herein do not exclude the presence or addition of one or more other components.

As used herein, the term "combination thereof" may refer to a mixture, a stack, a composite, a copolymer, an alloy, a blend, or a reaction product.

Unless otherwise defined herein, a particle diameter may be an average particle diameter. In addition, a particle diameter is defined as an average particle diameter (D50) indicating the diameter of particles at a cumulative volume of about 50 vol% in particle size distribution. The average particle diameter (D50) may be measured by a method widely known to those skilled in the art, for example, by a particle size analyzer, an image of transmission electron microscope (TEM), or an image of scanning electron microscope (SEM). Alternatively, the average particle diameter (D50) may be measured by a measurement device using dynamic light-scattering, wherein data analysis is conducted to count the number of particles for each particle size range, and an average particle diameter (D50) value may then be obtained through calculation. Also, a laser scattering method may be utilized to measure the average particle diameter. In the measuring using the laser diffraction method, more specifically, target particles are dispersed in a dispersion medium, introduced into a commercially available laser diffraction particle diameter measuring device (e.g., MT 3000 available from Microtrac, Ltd.), irradiated with ultrasonic waves of about 28 kHz at a power of 60 W, and then an average particle diameter (D50) based on 50% of the particle diameter distribution in the measuring device may be calculated.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

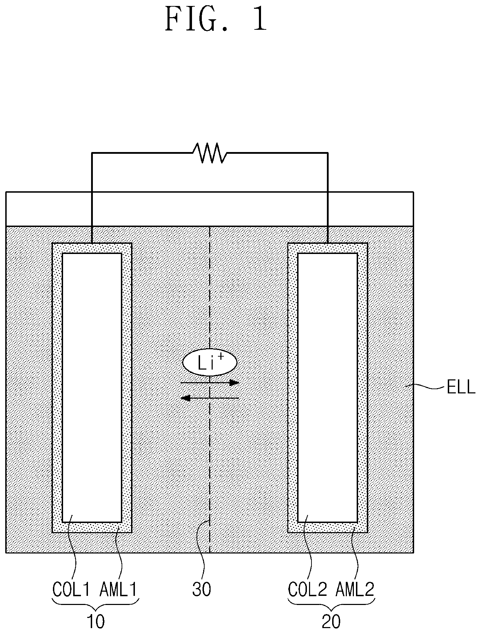

FIG. 1 is a cross-sectional view of a rechargeable lithium battery according to example embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20, and the separator 30 may be in contact with the electrolyte solution ELL. The positive electrode 10, the negative electrode 20 and the separator 30 may be impregnated in the electrolyte solution ELL.

The electrolyte solution ELL may be or include a medium for transferring lithium ions between the positive electrode 10 and the negative electrode 20. In the electrolyte solution ELL, the lithium ions may move through the separator 30 toward the positive electrode 10 or the negative electrode 20.

### Positive Electrode 10

The positive electrode 10 for a rechargeable lithium battery may include a current collector COL1 and a positive electrode active material layer AML1 on the current collector. The positive electrode active material layer AML1 may include a positive electrode active material and may further include a binder and/or a conductive material (e.g., an electrically conductive material).

For example, the positive electrode 10 may further include an additive that can constitute a sacrificial positive electrode.

An amount of the positive electrode active material may be about 90 wt% to about 99.5 wt% based on 100 wt% of the positive electrode active material layer AML1. Amounts of the binder and the conductive material may be about 0.5 wt% to about 5 wt%, respectively, based on 100 wt% of the positive electrode active material layer AML1.

The binder may be configured to sufficiently attach the positive electrode active material particles to each other and also to sufficiently attach the positive electrode active material to the current collector COL1. Examples of the binder may include at least one of polyvinyl alcohol, carboxymethyl cellulose, hydroxypropyl cellulose, diacetyl cellulose, polyvinylchloride, carboxylated polyvinylchloride, polyvinyl fluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may impart conductivity (e.g., electrical conductivity) to the electrode. Any material that does not cause chemical change (e.g., does not cause an undesirable chemical change in the rechargeable lithium battery) and that conducts electrons can be used in the battery. Examples of the conductive material may include a carbon-based material such as, e.g., at least one of natural graphite, artificial graphite, carbon black, acetylene black, ketjen black, a carbon fiber, a carbon nanofiber, and carbon nanotube; a metal-based material containing at least one of copper, nickel, aluminium, silver, etc., in a form of a metal powder or a metal fiber; a conductive polymer such as a polyphenylene derivative; or a mixture thereof.

Al may be used as the current collector COL1, but is not limited thereto.

### Positive Electrode Active Material

The positive electrode active material may include a compound (lithiated intercalation compound) that is capable of intercalating and deintercalating lithium. Specifically, at least one of a composite oxide of lithium and a metal including at least one of cobalt, manganese, nickel, and combinations thereof may be used.

The composite oxide may be or include a lithium transition metal composite oxide. Examples of the composite oxide may include lithium at least one of nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used: LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-6-c}Mn_{d}X_{c}O_{2-α}D_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); LiₐFePO₄(0.90≤a≤1.8).

In the above Chemical Formulas, A is or includes Ni, Co, Mn, or a combination thereof; X is or includes Al, Ni, Co, Mn, Cr, Fe, Mg, Sr, V, a rare earth element or a combination thereof; D is or includes O, F, S, P, or a combination thereof; G is or includes Al, Cr, Mn, Fe, Mg, La, Ce, Sr, V, or a combination thereof; and L¹ is or includes Mn, Al, or a combination thereof.

The positive electrode active material may be or include, for example, a high nickel-based positive electrode active material having a nickel content that is greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal, excluding lithium in the lithium transition metal composite oxide. The high-nickel-based positive electrode active material may be capable of realizing high capacity, and can be applied to a high-capacity, high-density rechargeable lithium battery.

### Negative Electrode 20

The negative electrode 20 for a rechargeable lithium battery may include a current collector COL2 and a negative electrode active material layer AML2 on the current collector COL2, as illustrated in FIG. 1. The negative electrode active material layer AML2 may include a negative electrode active material, and may further include a binder and/or a conductive material (e.g., an electrically conductive material).

For example, the negative electrode active material layer AML2 may include about 90 wt% to about 99 wt% of the negative electrode active material, about 0.5 wt% to about 5 wt% of the binder, and about 0 wt% (e.g., more than about 0 wt%) to about 5 wt% of the conductive material.

The binder may be configured to sufficiently attach the negative electrode active material particles to each other, and also to sufficiently attach the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause chemical change (e.g., does not cause an undesirable chemical change in the rechargeable lithium battery) and that conducts electrons can be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminium, silver, etc. in a form of a metal powder or a metal fiber; a conductive polymer such as a polyphenylene derivative; or a mixture thereof.

The negative current collector COL2 may include at least one of a copper foil, a nickel foil, a stainless steel foil, a titanium foil, a nickel foam, a copper foam, a polymer substrate coated with a conductive metal, or a combination thereof.

### Negative Electrode Active Material

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be or include graphite such as non-shaped, sheet-shaped, flake-shaped, sphere-shaped, or fiber-shaped natural graphite or artificial graphite. The amorphous carbon may be or include a soft carbon, a hard carbon, a mesophase pitch carbonization product, calcined coke, and the like.

The lithium metal alloy includes an alloy of lithium and a metal including at least one of Na, K, Rb, Cs, Fr, Be, Mg, Ca, Sr, Si, Sb, Pb, In, Zn, Ba, Ra, Ge, Al, and Sn (e.g. at least one of Na, K, Rb, Cs, Be, Mg, Ca, Sr, Si, Sb, Pb, In, Zn, Ba, Ge, Al, and Sn).

The material capable of doping/dedoping lithium may be or include a Si-based negative electrode active material or a Sn-based negative electrode active material. The Si-based negative electrode active material may include at least one of silicon, a silicon-carbon composite, SiOₓ (0 < x ≤ 2, e.g. 0 < x < 2), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, SnO₂, a Sn-based alloy, or a combination thereof.

The silicon-carbon composite may be or include a composite of silicon and amorphous carbon. According to an example embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

### Separator 30

Depending on the type of the rechargeable lithium battery, the separator 30 may be present between the positive electrode 10 and the negative electrode 20 illustrated in FIG. 1. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one or both surfaces of the porous substrate.

The porous substrate may be or include a polymer film formed of or including a polymer polyolefin such as at least one of polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

### Electrolyte Solution ELL

The electrolyte solution ELL for a rechargeable lithium battery illustrated in FIG. 1 may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone or in combination of two or more solvents.

In addition, when using a carbonate-based solvent, a cyclic carbonate and a chain carbonate may be mixed and used, and the cyclic carbonate and the chain carbonate may be mixed in a volume ratio of about 1: 1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂)(wherein x and y are integers of 1 to 20), lithium trifluoromethane sulfonate, lithium tetrafluoroethanesulfonate, lithium difluoro(oxalato)borate(LiDFOB), lithium difluorobis(oxalato)phosphate (LiDFBOP), and lithium bis(oxalato) borate (LiBOB).

### Rechargeable Lithium Battery

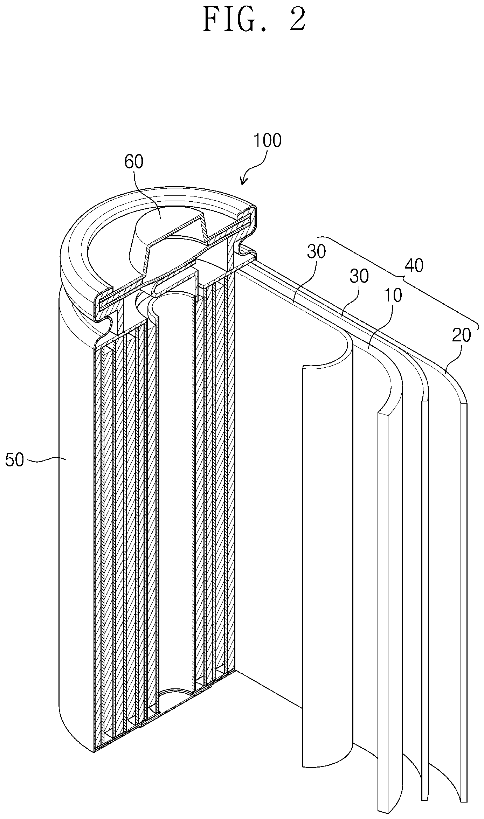

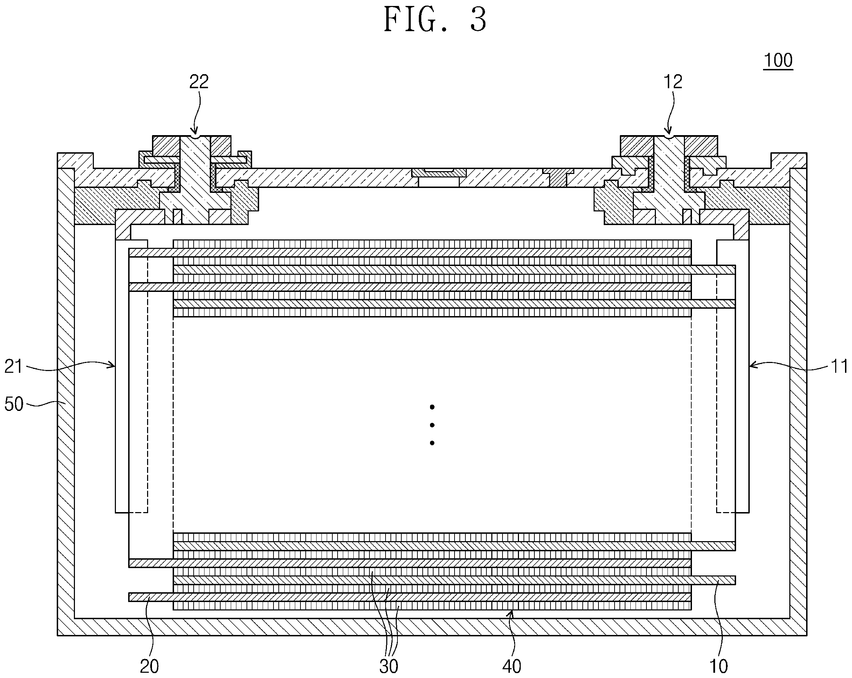

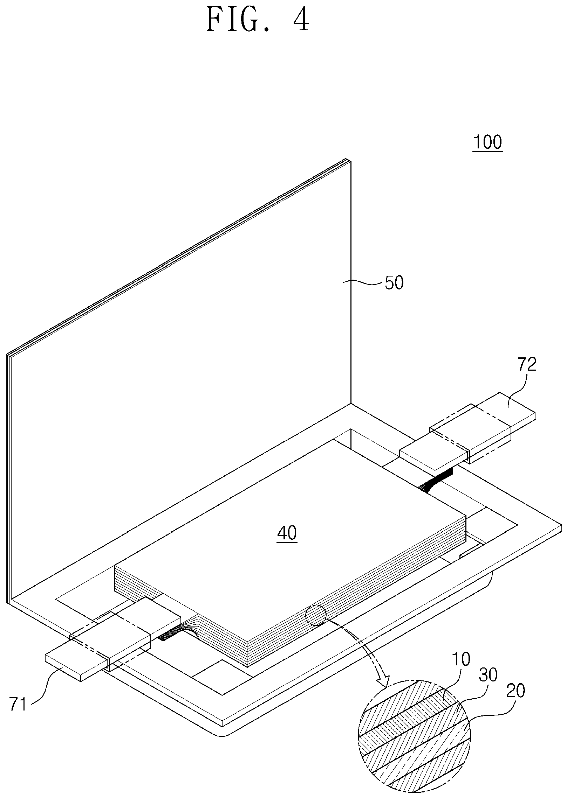

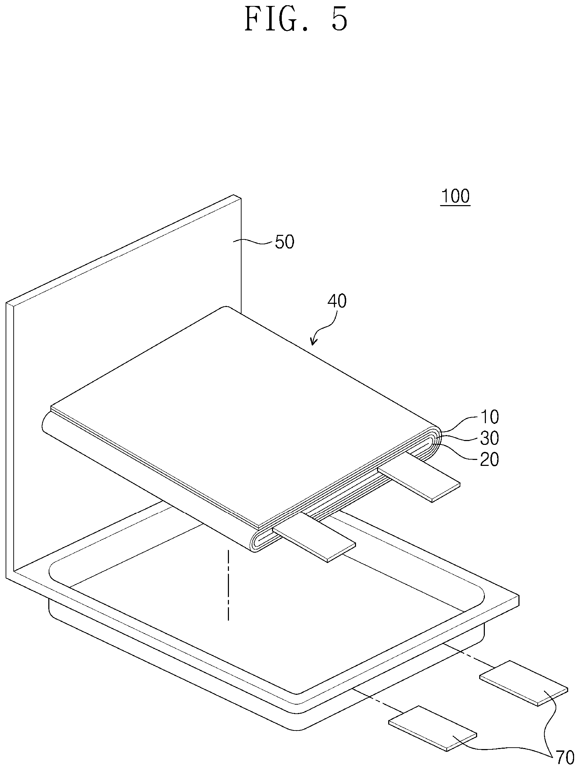

The rechargeable lithium battery may be classified into cylindrical, prismatic, pouch, or coin-type batteries, and the like depending on the shape thereof. FIGS. 2 to 5 are schematic views illustrating a rechargeable lithium battery according to an example embodiment. FIG. 2 illustrates a cylindrical battery, FIG. 3 illustrates a prismatic battery, and FIGS. 4 and 5 illustrate pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as illustrated in FIG. 2. In FIG. 3, the rechargeable lithium battery 100 may include a positive lead tab 11, a positive terminal 12, a negative lead tab 21, and a negative terminal 22. As illustrated in FIGS. 4 and 5, the rechargeable lithium battery 100 may include an electrode tab 70 illustrated in FIG. 5, which may be, for example, a positive electrode tab 71 and a negative electrode tab 72 illustrated in FIG. 4 and constituting an electrical path for inducing the current formed in the electrode assembly 40 to outside of the battery 100.

Hereinafter, a rechargeable lithium battery according to example embodiments of the present disclosure will be described in more detail.

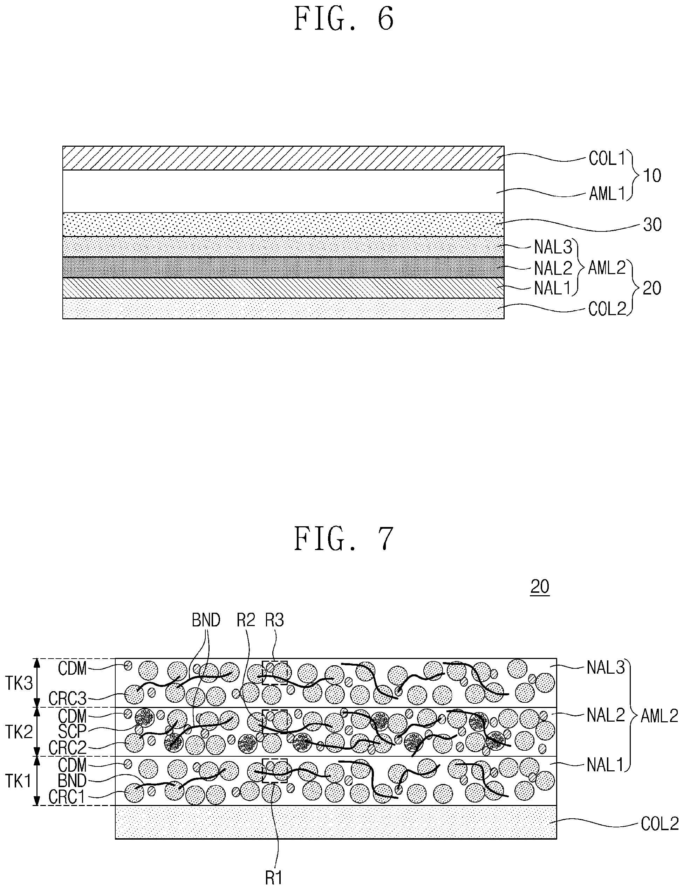

FIG. 6 is a cross-sectional view showing a rechargeable lithium battery according to example embodiments of the present disclosure. FIG. 7 is a cross-sectional view showing a negative electrode according to example embodiments of the present disclosure.

Referring to FIG. 6, as described above with reference to FIG. 1, the rechargeable lithium battery according to the present disclosure may include a positive electrode 10, a negative electrode 20, and a separator 30 between the positive electrode 10 and the negative electrode 20. Although not explicitly shown in FIG. 6, the rechargeable lithium battery according to the present disclosure may further include an electrolyte solution ELL. The separator 30 may be impregnated with the electrolyte solution ELL.

The positive electrode 10 may include a positive electrode current collector COL1 and a positive electrode active material layer AML1 on the positive electrode current collector COL1. The negative electrode 20 may include a negative electrode current collector COL2 and a negative electrode active material layer AML2 on the negative electrode current collector COL2. The separator 30 may be interposed between the positive electrode active material layer AML1 and the negative electrode active material layer AML2.

Referring to FIG. 7, the negative electrode active material layer AML2 according to example embodiments of the present disclosure may have a multilayer structure. For example, the negative electrode active material layer AML2 may include a first active material layer NAL1, a second active material layer NAL2, and a third active material layer NAL3, which are stacked, e.g., sequentially stacked. The first active material layer NAL1 may be provided on (e.g., directly provided on) the negative electrode current collector COL2. The second active material layer NAL2 may be provided on (e.g., directly provided on) the first active material layer NAL1. The third active material layer NAL3 may be provided on (e.g., directly provided on) the second active material layer NAL2. The second active material layer NAL2 may be interposed between the first active material layer NAL1 and the third active material layer NAL3.

The first to third active material layers NAL1 to NAL3 may include different negative electrode active materials. The first to third active material layers NAL1 to NAL3 may have different compositions. The first to third active material layers NAL1 to NAL3 may each include a carbon-based negative electrode active material, for example, crystalline carbon, amorphous carbon, or a combination thereof. The detailed description thereof may be the same as what is described above for the negative electrode active material.

The first active material layer NAL1 may include a first crystalline carbon CRC1. The second active material layer NAL2 may include a second crystalline carbon CRC2 and silicon-containing particles SCP. The third active material layer NAL3 may include a third crystalline carbon CRC3. The first to third crystalline carbons CRC1 to CRC3 may be or include natural graphite, artificial graphite, or a mixture thereof.

In an example embodiment of the present disclosure, a proportion of natural graphite in the first crystalline carbon CRC1 of the first active material layer NAL1 may be about 0 wt% to about 100 wt%, about 50 wt% to about 100 wt%, or about 80 wt% to about 100 wt%. The proportion of natural graphite in the first crystalline carbon CRC1 of the first active material layer NAL1 may be greater than a proportion of artificial graphite (e.g., the first crystalline carbon CRC1 may consist of natural graphite; in other words, the first crystalline carbon CRC1 may not include any artificial graphite). In an example embodiment of the present disclosure, a proportion of artificial graphite in the third crystalline carbon CRC3 of the third active material layer NAL3 may be about 0 wt% to about 100 wt%, about 50 wt% to about 100 wt%, or about 80 wt% to about 100 wt%. The proportion of artificial graphite in the third crystalline carbon CRC3 of the third active material layer NAL3 may be greater than a proportion of natural graphite (e.g., the third crystalline carbon CRC3 may consist of artificial graphite; in other words, the third crystalline carbon CRC3 may not include any natural graphite). In an example embodiment of the present disclosure, a proportion of natural graphite in the first crystalline carbon CRC1 of the first active material layer NAL1 may be about 20 wt% to about 80 wt%, about 30 wt% to about 70 wt%, or about 40 wt% to about 60 wt%, and a proportion of artificial graphite in the second crystalline carbon CRC2 of the second active material layer NAL2 may be about 20 wt% to about 80 wt%, about 30 wt% to about 70 wt%, or about 40 wt% to about 60 wt%. The proportion of natural graphite in the second crystalline carbon CRC2 of the second active material layer NAL2 may be substantially the same as the proportion of artificial graphite in the second crystalline carbon CRC2 of the second active material layer NAL2. The second crystalline carbon CRC2 may consist of both natural graphite and artificial graphite. For example, the first active material layer NAL1 may include natural graphite, the third active material layer NAL3 may include artificial graphite, and the second active material layer NAL2 may include a mixture of natural graphite and artificial graphite.

In an example embodiment of the present disclosure, the second active material layer NAL2 may further include amorphous carbon and silicon particles. The second active material layer NAL2 may include a silicon-carbon composite as silicon-containing particles SCP, which will be described later.

The second active material layer NAL2 may contain carbon (C) and silicon (Si). The silicon (Si) may be derived from the silicon-containing particles SCP. The carbon (C) may be derived from at least one of crystalline carbon, amorphous carbon, or carbon in the silicon-containing particles SCP in the second active material layer NAL2.

A proportion of silicon-containing particles in the second active material layer NAL2 may be about 5 wt% to about 99 wt%, about 5 wt% to about 30 wt%, or about 5 wt% to about 10 wt%. A proportion of Si in the second active material layer NAL2 may be about 2 wt% to about 40 wt%, about 2 wt% to about 12 wt%, or about 2 wt% to about 4 wt%. The silicon-containing particles SCP may include silicon, a silicon-carbon composite, SiOₓ (0 < x ≤ 2, e.g. 0 < x < 2), a Si-Q alloy (where Q is or includes at least one of an alkali metal, an alkaline earth metal, a Group 13 element, a Group 14 element (except for Si), a Group 15 element, a Group 16 element, a transition metal, a rare-earth element, and a combination thereof), or a combination thereof.

The first to third active material layers NAL1 to NAL3 may each further include a binder. The content of the binder of each of, or one of, the first to third active material layers NAL1 to NAL3 may be about 1 wt% to about 10 wt%. In an example embodiment of the present disclosure, the content of the binder of the second active material layer NAL2 containing the silicon-containing particles SCP may be greater than the content of the binder of each of the first and third active material layers NAL1 and NAL3 containing crystalline carbon alone. Meanwhile, a high content of binder in the active material layer may cause reduction in electrical conductivity.

In an example embodiment, the second active material layer NAL2 may further include a conductive material CDM. The second active material layer NAL2 further includes the conductive material CDM, and may thus improve electrical conductivity.

In an example embodiment, the content of the conductive material CDM in the second active material layer NAL2, that is, the weight of the conductive material CDM with respect to a total weight of the second active material layer NAL2, may be about 0.2 wt% to about 1.0 wt% (e.g., about 0.3 wt% to about 0.9 wt%, about 0.4 wt% to about 0.8 wt%, or about 0.5 wt% to about 0.7 wt%). When the content of the conductive material CDM in the second active material layer NAL2 is less than about 0.2 wt%, electrical conductivity may decrease, which may cause reduced charging/discharging rate. When the content of the conductive material CDM in the second active material layer NAL2 is greater than about 1.0 wt%, the energy density may be reduced to cause a decrease in battery capacity.

In an example embodiment, the first active material layer NAL1 and the third active material layer NAL3 may further include the conductive material CDM. In some embodiments, the content of the conductive material CDM in the first active material layer NAL1, that is, the weight of the conductive material CDM with respect to a total weight of the first active material layer NAL1, may be about 0.05 wt% to about 0.25 wt% (e.g., about 0.075 wt% to about 0.225 wt%, about 0.1 wt% to about 0.2 wt%, or about 0.125 wt% to about 0.175 wt%). In some embodiments, the content of the conductive material CDM in the third active material layer NAL3, that is, the weight of the conductive material CDM with respect to a total weight of the third active material layer NAL3, may be about 0.05 wt% to about 0.25 wt% (e.g., about 0.075 wt% to about 0.225 wt%, about 0.1 wt% to about 0.2 wt%, or about 0.125 wt% to about 0.175 wt%). In some embodiments, the content of the conductive material CDM in the first active material layer NAL1 may be substantially the same as the content of the conductive material CDM in the third active material layer NAL3.

In an example embodiment, with respect to a total amount of the conductive material CDM in the negative electrode active material layer AML2, a proportion of the conductive material CDM distributed in the second active material layer NAL2 may be greater than a proportion of the conductive material CDM distributed in each of, or in one of, the first active material layer NAL1 and the third active material layer NAL3. For example, with respect to the total amount of the conductive material CDM included in the negative electrode active material layer AML2, the proportion of the conductive material CDM distributed in the first active material layer NAL1 may be about 20% or less (e.g., about 17.5% or less). The proportion of the conductive material CDM distributed in the second active material layer NAL2 may be about 60% or more (e.g., about 65% or more). The proportion of the conductive material CDM distributed in the third active material layer NAL3 may be about 20% or less (e.g., about 17.5% or less). For example, the proportion of the conductive material CDM distributed in the first active material layer NAL1 may be about 10% to about 20% (e.g., about 12.5% to about 17.5%, or about 15% to about 17.5%). The proportion of the conductive material CDM distributed in the second active material layer NAL2 may be about 60% to about 80% (e.g., about 65% to about 75%, or about 65% to about 70%). The proportion of the conductive material CDM distributed in the third active material layer NAL3 may be about 10% to about 20% (e.g., about 12.5% to about 17.5%, or about 15% to about 17.5%).

For example, with respect to 100 wt%, which is the total amount of conductive material CDM included in the negative electrode active material layer AML2, about 10 wt% to about 20 wt% (e.g., about 12.5% to about 17.5%, or about 15% to about 17.5%) of conductive material CDM may be distributed in the first active material layer NAL1. About 60 wt% to about 80 wt% (e.g., about 65% to about 75%, or about 65% to about 70%) of conductive material CDM may be distributed in the second active material layer NAL2. In addition, about 10 wt% to about 20 wt% (e.g., about 12.5% to about 17.5%, or about 15% to about 17.5%) of conductive material CDM may be distributed in the third active material layer NAL3.

The substantial distribution of conductive material in the second active material layer NAL2 containing the silicon-containing particles SCP may increase the content of active material in the first and third active material layers NAL1 and NAL3, and improve the electrical conductivity of the second active material layer NAL2. Accordingly, a rechargeable lithium battery including the negative electrode active material layer AML2 may have significantly improved energy density and charging/discharging rate. In an example embodiment, in terms of a composition ratio of each of the first to third active material layers NAL1 to NAL3, the content of conductive material in the first to third active material layers NAL1 to NAL3 may be different. Specifically, the content of the conductive material CDM in the second active material layer NAL2 may be greater than the content of the conductive material CDM in the first active material layer NAL1. The content of the conductive material CDM in the second active material layer NAL2 may be greater than the content of the conductive material CDM in the third active material layer NAL3.

For example, a weight ratio of the conductive material CDM in the second active material layer NAL2 may be greater than a weight ratio of the conductive material CDM in the first active material layer NAL1, and a weight ratio of the conductive material CDM in the second active material layer NAL2 may be greater than a weight ratio of the conductive material CDM in the third active material layer NAL3. Accordingly, even when thicknesses of the first to third active material layers NAL1 to NAL3 in a third direction are substantially the same, the conductive material CDM may be most widely distributed in the second active material layer NAL2 of the negative electrode active material layer AML2.

In an example embodiment, the conductive material CDM may include a material that is different from the first to third crystalline carbons. For example, the conductive material CDM may include at least one of carbon nanotube, carbon nanofiber, graphene, fullerene, metal powder, metal fiber, and a conductive polymer. Metals included in the metal powder and the metal fiber may include, for example, at least one of copper, nickel, aluminium, silver, and the like. The conductive polymer may be or include, for example, at least one of a polyphenylene derivative, polyaniline (PANI), polypyrrole (PPy), polythiophene (PTh), and the like. Specifically, the conductive material CDM may include carbon nanotubes.

In an example embodiment, the carbon nanotubes may have an average length of about 40 µm to about 250 µm, for example, about 70 µm to about 250 µm or about 100 µm to about 250 µm. The average length of the carbon nanotubes may be determined by scanning electron microscopy (SEM).

In an example embodiment, the carbon nanotubes may have an average diameter of about 1 nm to about 20 nm, for example, about 5 nm to about 20 nm, about 10 nm to about 20 nm, about 10 nm to about 15 nm, or about 15 nm to about 20 nm. The average diameter of the carbon nanotubes may be determined by scanning electron microscopy (SEM).

In an example embodiment, the carbon nanotubes may be single-walled carbon nanotubes, double-walled carbon nanotubes, multi-walled carbon nanotubes, or a combination thereof. In some embodiments, the carbon nanotubes may be single-walled carbon nanotubes.

In an example embodiment, the first to third active material layers NAL1 to NAL3 may each include a conductive material. The first active material layer NAL1 may have a first thickness TK1, the second active material layer NAL2 may have a second thickness TK2, and the third active material layer NAL3 may have a third thickness TK3. In an example embodiment of the present disclosure, the second thickness TK2 may be greater than the first thickness TK1. The second thickness TK2 may be greater than the third thickness TK3. In another example, a ratio TK1/TK2 of the first thickness TK1 to the second thickness TK2 may be about 0.8 to about 1.2. A ratio TK3/TK2 of the third thickness TK3 to the second thickness TK2 may be about 0.8 to about 1.2.

The second active material layer NAL2 includes the silicon-containing particles SCP, and may thus have increased volume when a rechargeable lithium battery is charged. That is, when charging a rechargeable lithium battery, the second thickness TK2 of the second active material layer NAL2 may increase. On the other hand, the first active material layer NAL1 and the third active material layer NAL3 formed of or including crystalline carbon alone may not have significantly changes in volume (or thickness). This is because the silicon-containing particles SCP absorb more lithium ions than crystalline carbon when charging batteries. When charging/discharging a rechargeable lithium battery, the first active material layer NAL1 and the third active material layer NAL3 may constitute a buffer layer to alleviate changes in the volume (or thickness) of the second active material layer NAL2.

In an example embodiment, interfaces between the first active material layer NAL1, the second active material layer NAL2, and the third active material layer NAL3 may not be clearly distinguished. When the interfaces are not clearly distinguished, the interfaces may be inferred from the concentration profile of silicon particles, or from the concentration profile of the conductive material CDM. For example, since there is a sharp or substantial increase in the content of silicon particles and the conductive material in the second active material layer NAL2, a section in which the concentration of silicon particles and the conductive material CDM sharply or substantially increases and then sharply or substantially decreases may be defined as the second active material layer NAL2, and based on this, an upper layer may be defined as the third active material layer NAL3, and a lower layer may be defined as the first active material layer NAL1.

For example, the inference from the concentration profile about the interfaces may be performed in the following manner. First, the concentration of silicon particles or the conductive material CDM according to the depth of the negative electrode active material layer AML2 is measured. Methods for measuring the concentration are not particularly limited, and for example, optical methods, electron microscopic analysis methods, X-ray diffraction analysis methods, and the like may be used. Accordingly, a point at which the concentration of silicon particles or the conductive material CDM sharply or substantially increases may be measured, and then a point at which the concentration of the silicon particles or the conductive material CDM sharply or substantially decreases may be measured. Since the content of the silicon particles and the conductive material CDM in the second active material layer NAL2 sharply or substantially increases, a region from the point showing a sharp or substantial increase in the concentration of silicon particles or the conductive material CDM to the point showing a sharp or substantial decrease in the concentration may be defined as the second active material layer NAL2. Thereafter, a region of the negative electrode active material layer AML2 on a lower surface of the second active material layer NAL2 (i.e., a layer facing the negative electrode current collector COL2) may be defined as the first active material layer NAL1, and a region of the negative electrode active material layer AML2 on an upper surface of the second active material layer NAL2 (i.e., a layer facing the separator 30) may be defined as the third active material layer NAL3.

Referring back to FIG. 7, a first region R1 may be defined as a space having a predetermined or desired size in the first active material layer NAL1. A second region R2 may be defined as a space having a predetermined or desired size in the second active material layer NAL2. A third region R3 may be defined as a space having a predetermined or desired size in the third active material layer NAL3. For example, the first region R1 may be about a 100 nm*100 nm*100 nm cubic space in the first active material layer NAL1, and the second region R2 may be about a 100 nm*100 nm*100 nm cubic space in the second active material layer NAL2, and the third region R3 may be about a 100 nm*100 nm*100 nm cubic space in the third active material layer NAL3. The concentration of silicon particles or the concentration of the conductive material CDM in the first to third active material layers NAL1 to NAL3 may be inferred by measuring the concentration of silicon particles or the concentration of the conductive material CDM in the first to third regions R1 to R3.

In another example embodiment, the concentration of silicon particles or the concentration of the conductive material CDM in the first to third active material layers NAL1 to NAL3 may be inferred by analyzing the composition of a partial region of the first to third active material layers NAL1 to NAL3 without inferring the interfaces. The first to third regions R1 to R3 may be defined as follows.

Referring back to FIG. 7, a cubic space (100 nm*100 nm*100 nm) centered on a point at a predetermined or desired distance in the third direction D3 from one surface of the negative electrode active material layer AML2 adjacent to the negative electrode current collector COL2 may be defined as the first region R1. For example, the predetermined or desired distance may be about 100 nm to about 200 nm.

A cubic space (100 nm*100 nm*100 nm) centered on a point within a predetermined or desired distance in the third direction D3 or in the opposite direction from the center of a thickness of the negative electrode active material layer AML2 in the third direction D3 may be defined as the second region R2. For example, the predetermined or desired distance may be about 100 nm to about 200 nm.

A cubic space (100 nm*100 nm*100 nm) centered on a point at a predetermined or desired distance in a direction opposite to the third direction from one surface of the negative electrode active material layer AML2 adjacent to the separator 30, that is, an upper surface of the negative electrode active material layer AML2, may be defined as the third region R3. For example, the predetermined or desired distance may be about 100 nm to about 200 nm.

The concentration of silicon particles or the concentration of the conductive material CDM in the first to third active material layers NAL1 to NAL3 may be inferred by measuring and analyzing the concentration of silicon particles or the concentration of the conductive material CDM in the first to third regions R1 to R3 defined as above.

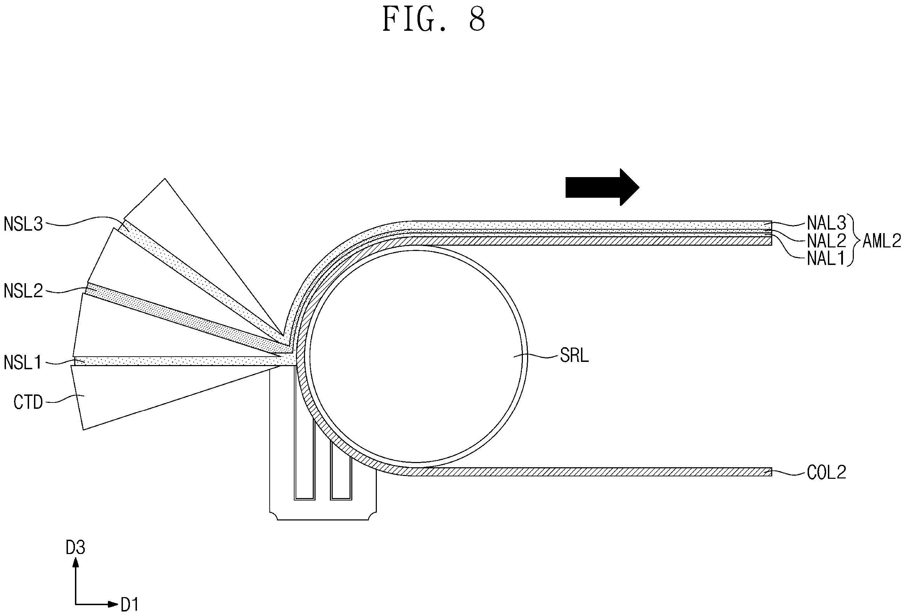

FIG. 8 is a cross-sectional view for describing the process of preparing a negative electrode according to an example embodiment of the present disclosure.

Referring to FIG. 8, the wound negative electrode current collector COL2 may be unwound and subjected to a coating process. The traveling negative electrode current collector COL2 may move in a first direction D1 together with the coating by a supporting roll SRL. The coating process on the negative electrode current collector COL2 may be performed on the support roll SRL.

A coating die CTD may be placed adjacent to the support roll SRL. The coating die CTD may include three slurry inlets. A first negative electrode slurry NSL1, a second negative electrode slurry NSL2, and a third negative electrode slurry NSL3 may be provided to the three slurry inlets, respectively.

For example, the first negative electrode slurry NSL1 may include at least one of the first crystalline carbon CRC1, a binder, and a solvent. The second negative electrode slurry NSL2 may include at least one of the second crystalline carbon CRC2, the silicon-containing particles SCP, a binder, and a solvent. The third negative electrode slurry NSL3 may include at least one of the third crystalline carbon CRC3, a binder, and a solvent. The first to third crystalline carbons CRC1 to CRC3 may each independently be or include at least one of natural graphite, artificial graphite, or a mixture thereof. For example, the first negative electrode slurry NSL1 may include natural graphite. The third negative electrode slurry NSL3 may include artificial graphite.

In an example embodiment, the second negative electrode slurry NSL2 may further include the conductive material CDM. For example, the conductive material CDM may include at least one of carbon nanotube, carbon nanofiber, graphene, fullerene, metal powder, metal fiber, and a conductive polymer. Specifically, the conductive material CDM may include carbon nanotubes.

In an example embodiment, the first to third cathode slurries NSL1 to NSL3 may each independently further include the conductive material CDM. A weight ratio of the conductive material CDM in the second negative electrode slurry NSL2 may be greater than a weight ratio of the conductive material CDM in the first negative electrode slurry NSL1. A weight ratio of the conductive material CDM in the second negative electrode slurry NSL2 may be greater than a weight ratio of the conductive material CDM in the third negative electrode slurry NSL3.

The first negative electrode slurry NSL1, the second negative electrode slurry NSL2, and the third negative electrode slurry NSL3 may be applied, e.g., sequentially applied, onto the negative electrode current collector COL2 through the coating die CTD.

In an example embodiment, the amount of the first to third negative electrode slurries NSL1 to NSL3 applied is such that the content of the conductive material CDM in the second active material layer NSL2 formed later is greater than the content of the conductive material CDM in each of the applied first and third active material layers NAL1 and NAL3. For example, the amount of the first to third negative electrode slurries NSL1 to NSL3 applied may be such that the content of the conductive material CDM in the first active material layer NAL1 is about 10 wt% to about 20 wt%, the content of the conductive material CDM in the second active material layer NAL2 is about 60 wt% to about 80 wt%, and the content of the conductive material CDM in the third active material layer NAL3 is about 10 wt% to about 20 wt%, with respect to 100 wt%, which is the total content of the conductive material CDM in the negative electrode active material layer AML2.

A solvent in the slurry may be or include a solvent commonly used in the art, and may include, for example, at least one of dimethyl sulfoxide (DMSO), isopropyl alcohol, N-methylpyrrolidone (NMP), acetone, water, or a combination thereof.

The first negative electrode slurry NSL1, the second negative electrode slurry NSL2, and the third negative electrode slurry NSL3 applied onto the negative electrode current collector COL2 may be dried to form the first active material layer NAL1, the second active material layer NAL2, and the third active material layer NAL3, respectively. The first active material layer NAL1, the second active material layer NAL2, and the third active material layer NAL3, which are stacked, e.g., sequentially stacked, on the negative electrode current collector COL2, may constitute the negative electrode active material layer AML2.

For example, a roll pressing process, a slitting process, and a notching process may be performed, e.g., sequentially performed, on the negative electrode 20. A rechargeable lithium battery according to the present disclosure may be prepared by stacking the negative electrode 20, the separator 30, and the positive electrode 10, and providing the electrolyte solution ELL.

Hereinafter, example embodiments of the present disclosure will be described in more detail as follows. However, the example embodiments shown below are provided to assist understanding of the present disclosure, and the scope of the present disclosure is not limited to the Examples in any sense.

### Preparation of Silicon-Carbon Composite

Crystalline carbon (graphite, GNs, soft carbon) in a solvent (IPA, ETOH, and the like), nano-si (D50: 100 nm) ground for 10 to 20 hours using a Beads Mill (NETZSCH), and amorphous carbon (pitch, resin, hydrocarbon, and the like) were mixed at a weight ratio of 40:40:20 and uniformly dispersed using a homogenizer. Thereafter, the resulting product was spray-dried at a temperature of 50 to 100 °C using a spray dryer, and heat-treated at a temperature of 900 to 1000 °C using an N2 furnace to perform amorphous carbon coating. Then, the resulting product was ground and sieved using 400 mesh to finally obtain a silicon-carbon composite in which an amorphous carbon coating layer was formed.

### Example 1

### Preparation of Negative Electrode

As a conductive material, a single-walled carbon nanotube having an average diameter of 12 nm and an average length of 150 µm was used (the same in Examples 1 to 5 and Comparative Examples 1 to 5).

97.85 wt% of natural graphite, 0.8 wt% of carboxymethyl cellulose, 1.2 wt% of styrene-butadiene rubber, and 0.15 wt% of carbon nanotube were mixed in pure water to prepare a first negative electrode slurry.

43.7 wt% of natural graphite, 43.7 wt% of artificial graphite, 9 wt% of silicon-carbon composite, 0.8 wt% of carboxymethyl cellulose, 2.2 wt% of styrene-butadiene rubber, and 0.6 wt% of carbon nanotube were mixed in pure water to prepare a second negative electrode slurry.

97.85 wt% of artificial graphite, 0.8 wt% of carboxymethyl cellulose, 1.2 wt% of styrene-butadiene rubber, and 0.15 wt% of carbon nanotube were mixed in pure water to prepare a third negative electrode slurry.

The first negative electrode slurry, the second negative electrode slurry, and the third negative electrode slurry were sequentially applied onto a copper current collector. The amount of the first to third negative electrode slurries applied was regulated such that a ratio of the weight of the carbon nanotube in a first active material layer, the weight of the carbon nanotube in a second active material layer, and the weight of the carbon nanotube in a third active material layer formed thereafter was 1:4:1. Thereafter, the resulting product was dried at 80 °C and then roll pressed to prepare a negative electrode in which the first to third active material layers were sequentially stacked on a copper current collector.

### Preparation of Half Cell

The prepared negative electrode was wound into a circle having a diameter of 12 mm, and then a 2032 type coin half cell was prepared using a lithium metal as a counter electrode. In this case, as an organic electrolyte solution, a 1.3 M LiPF₆ solution dissolved in a mixed solvent prepared by mixing ethylene carbonate, diethylene carbonate, and fluoroethylene carbonate in a weight ratio of 2:6:2 was used.

### Preparation of Full Cell

96 g of positive electrode active material (LiNi_{0.6}Co_{0.2}Mn_{0.2}O₂), 2 g of polyvinylidene fluoride, 47 g of N-methylpyrrolidone as a solvent, and 2 g of carbon black as a conductive material were mixed to prepare a positive electrode slurry. The positive electrode slurry was applied onto an aluminium current collector using a doctor blade to prepare a positive electrode. The positive electrode was dried at 135 °C for 3 hours or more, and then roll-pressed and vacuum-dried.

The prepared negative electrode, a PTFE separator, and the positive electrode were stacked to prepare a rechargeable lithium battery. As an electrolyte, one in which 1.3 M LiPF₆ was dissolved in a mixed solvent of ethylene carbonate (EC), ethylmethyl carbonate (EMC), and diethyl carbonate (DEC) (3:5:2 by volume ratio) was used to prepare a CR2032 type coin full cell.

### Example 2

A negative electrode was prepared as follows so that the total amount of carbon nanotubes used was the same as in Example 1, but the distribution ratio of carbon nanotubes in the first to third active material layers was different.

97.82 wt% of natural graphite, 0.8 wt% of carboxymethyl cellulose, 1.2 wt% of styrene-butadiene rubber, and 0.18 wt% of carbon nanotube were mixed in pure water to prepare a first negative electrode slurry.

43.73 wt% of natural graphite, 43.73 wt% of artificial graphite, 9 wt% of silicon-carbon composite, 0.8 wt% of carboxymethyl cellulose, 2.2 wt% of styrene-butadiene rubber, and 0.54 wt% of carbon nanotube were mixed in pure water to prepare a second negative electrode slurry.

97.82 wt% of artificial graphite, 0.8 wt% of carboxymethyl cellulose, 1.2 wt% of styrene-butadiene rubber, and 0.18 wt% of carbon nanotube were mixed in pure water to prepare a third negative electrode slurry.

The first negative electrode slurry, the second negative electrode slurry, and the third negative electrode slurry were sequentially applied onto a copper current collector. The amount of the first to third negative electrode slurries applied was regulated such that a ratio of the weight of the carbon nanotube in a first active material layer, the weight of the carbon nanotube in a second active material layer, and the weight of the carbon nanotube in a third active material layer formed thereafter was 1:3:1. Thereafter, the resulting product was dried at 80 °C and then roll pressed to prepare a negative electrode in which the first to third active material layers were sequentially stacked on a copper current collector.

Then, half cells and full cells were prepared in the same manner as in Example 1.

### Example 3

A negative electrode was prepared as follows so that the total amount of carbon nanotubes used was the same as in Example 1, but the distribution ratio of carbon nanotubes in the first to third active material layers was different.

97.91 wt% of natural graphite, 0.8 wt% of carboxymethyl cellulose, 1.2 wt% of styrene-butadiene rubber, and 0.09 wt% of carbon nanotube were mixed in pure water to prepare a first negative electrode slurry.

43.64 wt% of natural graphite, 43.64 wt% of artificial graphite, 9 wt% of silicon-carbon composite, 0.8 wt% of carboxymethyl cellulose, 2.2 wt% of styrene-butadiene rubber, and 0.72 wt% of carbon nanotube were mixed in pure water to prepare a second negative electrode slurry.

97.91 wt% of artificial graphite, 0.8 wt% of carboxymethyl cellulose, 1.2 wt% of styrene-butadiene rubber, and 0.09 wt% of carbon nanotube were mixed in pure water to prepare a third negative electrode slurry.

The first negative electrode slurry, the second negative electrode slurry, and the third negative electrode slurry were sequentially applied onto a copper current collector. The amount of the first to third negative electrode slurries applied was regulated such that a ratio of the weight of the carbon nanotube in a first active material layer, the weight of the carbon nanotube in a second active material layer, and the weight of the carbon nanotube in a third active material layer formed thereafter was 1:8:1. Thereafter, the resulting product was dried at 80 °C and then roll pressed to prepare a negative electrode in which the first to third active material layers were sequentially stacked on a copper current collector.

Then, half cells and full cells were prepared in the same manner as in Example 1.

### Example 4

A negative electrode was prepared as follows so that the distribution ratio of carbon nanotubes in the first to third active material layers was the same as in Example 1, but the total weight of carbon nanotubes used was different.

97.95 wt% of natural graphite, 0.8 wt% of carboxymethyl cellulose, 1.2 wt% of styrene-butadiene rubber, and 0.05 wt% of carbon nanotube were mixed in pure water to prepare a first negative electrode slurry.

43.9 wt% of natural graphite, 43.9 wt% of artificial graphite, 9 wt% of silicon-carbon composite, 0.8 wt% of carboxymethyl cellulose, 2.2 wt% of styrene-butadiene rubber, and 0.2 wt% of carbon nanotube were mixed in pure water to prepare a second negative electrode slurry.

97.95 wt% of artificial graphite, 0.8 wt% of carboxymethyl cellulose, 1.2 wt% of styrene-butadiene rubber, and 0.05 wt% of carbon nanotube were mixed in pure water to prepare a third negative electrode slurry.

The first negative electrode slurry, the second negative electrode slurry, and the third negative electrode slurry were sequentially applied onto a copper current collector. The amount of the first to third negative electrode slurries applied was regulated such that a ratio of the weight of the carbon nanotube in a first active material layer, the weight of the carbon nanotube in a second active material layer, and the weight of the carbon nanotube in a third active material layer formed thereafter was 1:4:1. Thereafter, the resulting product was dried at 80 °C and then roll pressed to prepare a negative electrode in which the first to third active material layers were sequentially stacked on a copper current collector.

Then, half cells and full cells were prepared in the same manner as in Example 1.

### Example 5

A negative electrode was prepared as follows so that the distribution ratio of carbon nanotubes in the first to third active material layers was the same as in Example 1, but the total weight of carbon nanotubes used was different.

97.75 wt% of natural graphite, 0.8 wt% of carboxymethyl cellulose, 1.2 wt% of styrene-butadiene rubber, and 0.25 wt% of carbon nanotube were mixed in pure water to prepare a first negative electrode slurry.

43.5 wt% of natural graphite, 43.5 wt% of artificial graphite, 9 wt% of silicon-carbon composite, 0.8 wt% of carboxymethyl cellulose, 2.2 wt% of styrene-butadiene rubber, and 1.0 wt% of carbon nanotube were mixed in pure water to prepare a second negative electrode slurry.

97.75 wt% of artificial graphite, 0.8 wt% of carboxymethyl cellulose, 1.2 wt% of styrene-butadiene rubber, and 0.25 wt% of carbon nanotube were mixed in pure water to prepare a third negative electrode slurry.

The first negative electrode slurry, the second negative electrode slurry, and the third negative electrode slurry were sequentially applied onto a copper current collector. The amount of the first to third negative electrode slurries applied was regulated such that a ratio of the weight of the carbon nanotube in a first active material layer, the weight of the carbon nanotube in a second active material layer, and the weight of the carbon nanotube in a third active material layer formed thereafter was 1:4:1. Thereafter, the resulting product was dried at 80 °C and then roll pressed to prepare a negative electrode in which the first to third active material layers were sequentially stacked on a copper current collector.

Then, half cells and full cells were prepared in the same manner as in Example 1.

### Comparative Example 1

A negative electrode was prepared as follows so that the total amount of carbon nanotubes used was the same as in Example 1, but the distribution ratio of carbon nanotubes in the first to third active material layers was different.

97.7 wt% of natural graphite, 0.8 wt% of carboxymethyl cellulose, 1.2 wt% of styrene-butadiene rubber, and 0.3 wt% of carbon nanotube were mixed in pure water to prepare a first negative electrode slurry.

43 wt% of natural graphite, 43 wt% of artificial graphite, 9 wt% of silicon-carbon composite, 0.8 wt% of carboxymethyl cellulose, 2.2 wt% of styrene-butadiene rubber, and 0.3 wt% of carbon nanotube were mixed in pure water to prepare a second negative electrode slurry.

97.7 wt% of artificial graphite, 0.8 wt% of carboxymethyl cellulose, 1.2 wt% of styrene-butadiene rubber, and 0.3 wt% of carbon nanotube were mixed in pure water to prepare a third negative electrode slurry.

The first negative electrode slurry, the second negative electrode slurry, and the third negative electrode slurry were sequentially applied onto a copper current collector. The amount of the first to third negative electrode slurries applied was regulated such that a ratio of the weight of the carbon nanotube in a first active material layer, the weight of the carbon nanotube in a second active material layer, and the weight of the carbon nanotube in a third active material layer formed thereafter was 1:1:1. Thereafter, the resulting product was dried at 80 °C and then roll pressed to prepare a negative electrode in which the first to third active material layers were sequentially stacked on a copper current collector.

Then, half cells and full cells were prepared in the same manner as in Example 1.

### Comparative Example 2

A negative electrode was prepared as follows so that the total amount of carbon nanotubes used was the same as in Example 1, but the distribution ratio of carbon nanotubes in the first to third active material layers was different.

97.775 wt% of natural graphite, 0.8 wt% of carboxymethyl cellulose, 1.2 wt% of styrene-butadiene rubber, and 0.225 wt% of carbon nanotube were mixed in pure water to prepare a first negative electrode slurry.

43.775 wt% of natural graphite, 43.775 wt% of artificial graphite, 9 wt% of silicon-carbon composite, 0.8 wt% of carboxymethyl cellulose, 2.2 wt% of styrene-butadiene rubber, and 0.45 wt% of carbon nanotube were mixed in pure water to prepare a second negative electrode slurry.

97.775 wt% of artificial graphite, 0.8 wt% of carboxymethyl cellulose, 1.2 wt% of styrene-butadiene rubber, and 0.225 wt% of carbon nanotube were mixed in pure water to prepare a third negative electrode slurry.

The first negative electrode slurry, the second negative electrode slurry, and the third negative electrode slurry were sequentially applied onto a copper current collector. The amount of the first to third negative electrode slurries applied was regulated such that a ratio of the weight of the carbon nanotube in a first active material layer, the weight of the carbon nanotube in a second active material layer, and the weight of the carbon nanotube in a third active material layer formed thereafter was 1:2:1. Thereafter, the resulting product was dried at 80 °C and then roll pressed to prepare a negative electrode in which the first to third active material layers were sequentially stacked on a copper current collector.

Then, half cells and full cells were prepared in the same manner as in Example 1.

### Comparative Example 3

A negative electrode was prepared as follows so that the total amount of carbon nanotubes used was the same as in Example 1, but the distribution ratio of carbon nanotubes in the first to third active material layers was different.

The first to third negative electrode slurries were prepared in the same manner as in Example 3.

97.5 wt% of natural graphite, 0.8 wt% of carboxymethyl cellulose, 1.2 wt% of styrene-butadiene rubber, and 0.075 wt% of carbon nanotube were mixed in pure water to prepare a first negative electrode slurry.

41.5 wt% of natural graphite, 41.5 wt% of artificial graphite, 9 wt% of silicon-carbon composite, 0.8 wt% of carboxymethyl cellulose, 2.2 wt% of styrene-butadiene rubber, and 0.75 wt% of carbon nanotube were mixed in pure water to prepare a second negative electrode slurry.

97.5 wt% of artificial graphite, 0.8 wt% of carboxymethyl cellulose, 1.2 wt% of styrene-butadiene rubber, and 0.075 wt% of carbon nanotube were mixed in pure water to prepare a third negative electrode slurry.

The first negative electrode slurry, the second negative electrode slurry, and the third negative electrode slurry were sequentially applied onto a copper current collector. The amount of the first to third negative electrode slurries applied was regulated such that a ratio of the weight of the carbon nanotube in a first active material layer, the weight of the carbon nanotube in a second active material layer, and the weight of the carbon nanotube in a third active material layer formed thereafter was 1:10:1. Thereafter, the resulting product was dried at 80 °C and then roll pressed to prepare a negative electrode in which the first to third active material layers were sequentially stacked on a copper current collector.

Then, half cells and full cells were prepared in the same manner as in Example 1.

### Comparative Example 4

A negative electrode was prepared as follows so that the distribution ratio of carbon nanotubes in the first to third active material layers was the same as in Example 1, but the total weight of carbon nanotubes used was different.

97.5 wt% of natural graphite, 0.8 wt% of carboxymethyl cellulose, 1.2 wt% of styrene-butadiene rubber, and 0.5 wt% of carbon nanotube were mixed in pure water to prepare a first negative electrode slurry.

43 wt% of natural graphite, 43 wt% of artificial graphite, 9 wt% of silicon-carbon composite, 0.8 wt% of carboxymethyl cellulose, 2.2 wt% of styrene-butadiene rubber, and 2.0 wt% of carbon nanotube were mixed in pure water to prepare a second negative electrode slurry.

97.5 wt% of artificial graphite, 0.8 wt% of carboxymethyl cellulose, 1.2 wt% of styrene-butadiene rubber, and 0.5 wt% of carbon nanotube were mixed in pure water to prepare a third negative electrode slurry.

The first negative electrode slurry, the second negative electrode slurry, and the third negative electrode slurry were sequentially applied onto a copper current collector. The amount of the first to third negative electrode slurries applied was regulated such that a ratio of the weight of the carbon nanotube in a first active material layer, the weight of the carbon nanotube in a second active material layer, and the weight of the carbon nanotube in a third active material layer formed thereafter was 1:4:1. Thereafter, the resulting product was dried at 80 °C and then roll pressed to prepare a negative electrode in which the first to third active material layers were sequentially stacked on a copper current collector.

Then, half cells and full cells were prepared in the same manner as in Example 1.

### Comparative Example 5

A negative electrode was prepared as follows so that the distribution ratio of carbon nanotubes in the first to third active material layers was the same as in Example 1, but the total weight of carbon nanotubes used was different.

97.975 wt% of natural graphite, 0.8 wt% of carboxymethyl cellulose, 1.2 wt% of styrene-butadiene rubber, and 0.025 wt% of carbon nanotube were mixed in pure water to prepare a first negative electrode slurry.

43.95 wt% of natural graphite, 43.95 wt% of artificial graphite, 9 wt% of silicon-carbon composite, 0.8 wt% of carboxymethyl cellulose, 2.2 wt% of styrene-butadiene rubber, and 0.1 wt% of carbon nanotube were mixed in pure water to prepare a second negative electrode slurry.

97.975 wt% of artificial graphite, 0.8 wt% of carboxymethyl cellulose, 1.2 wt% of styrene-butadiene rubber, and 0.025 wt% of carbon nanotube were mixed in pure water to prepare a third negative electrode slurry.

The first negative electrode slurry, the second negative electrode slurry, and the third negative electrode slurry were sequentially applied onto a copper current collector. The amount of the first to third negative electrode slurries applied was regulated such that a ratio of the weight of the carbon nanotube in a first active material layer, the weight of the carbon nanotube in a second active material layer, and the weight of the carbon nanotube in a third active material layer formed thereafter was 1:4:1. Thereafter, the resulting product was dried at 80 °C and then roll pressed to prepare a negative electrode in which the first to third active material layers were sequentially stacked on a copper current collector.

Then, half cells and full cells were prepared in the same manner as in Example 1.

### Evaluation Example 1: Evaluation of specific capacity characteristics and discharge rate of half cell

Coin half cells using the negative electrodes according to Examples 1 to 5 and Comparative Examples 1 to 5 were charged with a cutoff of 0.2 C and 0.01 V in constant current conditions, charged with a cutoff of 0.05 C in constant voltage conditions, and discharged with a cutoff of 0.2 C and 1.5 V in constant current conditions. In this case, specific capacity characteristics of half batteries were evaluated by calculating discharge capacity for one cycle of charge and discharge, and the results are shown in Table 1 below.

Coin full cells using the negative electrodes according to Examples 1 to 5 and Comparative Examples 1 to 5 were charged with a cutoff of 0.2 C and 4.4 V in constant current conditions, charged with a cutoff of 0.05 C in constant voltage conditions, and then discharged with a cutoff of 2.45 V in constant current conditions as one cycle of charge and discharge, and then were charged with a cutoff of 2.0 C and 4.4 V in constant current conditions and with a cutoff of 0.05 C in constant voltage conditions 30 minutes. Thereafter, the cells were discharged with a cutoff of 0.2 C and 3.0 V in constant current conditions. From the measurement results, a ratio of charging capacity for one cycle of charge and discharge to charging capacity for two cycles of charge and discharge was calculated to determine a 30-minute quick charging rate (%), and the results are shown in Table 1 below.

**[Table 1]**

| | Weight ratio of conductive material (first active material layer: second active material layer: third active material layer) | Weight ratio of conductive material with respect to total weight of second active material layer (wt%) | Specific capacity (0.2 C, discharge amount for one cycle of charge/discharge) (mAh/g) | 30-minute quick charging rate (two cycles of charge/one cycle of charge) (%) |
|---|---|---|---|---|
| Example 1 | 1:4:1 | 0.6 | 483 | 70.6 |
| Example 2 | 1:3:1 | 0.54 | 480 | 68.5 |
| Example 3 | 1:8:1 | 0.72 | 478 | 70.8 |
| Example 4 | 1:4:1 | 0.2 | 479 | 68.0 |
| Example 5 | 1:4:1 | 1.0 | 475 | 70.5 |
| Comparative Example 1 | 1:1:1 | 0.3 | 478 | 60.2 |
| Comparative Example 2 | 1:2:1 | 0.45 | 478 | 62.3 |
| Comparative Example 3 | 1:10:1 | 0.75 | 469 | 68.2 |
| Comparative Example 4 | 1:4:1 | 2.0 | 460 | 70.5 |
| Comparative Example 5 | 1:4:1 | 0.1 | 455 | 58.0 |

Referring to Table 1, the negative electrodes of Comparative Examples 1 and 2, in which the conductive material (carbon nanotubes) was not substantially distributed in the second active material layer, but was evenly distributed in the first and third active material layers, have a fairly low quick charging rate. Conversely, with respect to the total content of the conductive material, the negative electrode of Comparative Example 3, which is substantially distributed in the second active material layer, has a quick charging rate similar to the charging rate of Example 1 but has a significantly reduced specific capacity.

In addition, the negative electrode of Comparative Example 4, in which the distribution ratio of the conductive material in the first to third active material layers is the same as the distribution ratio of the conductive material in the negative electrode of Example 1, but the content of the conductive material in the second active material layer is significantly high, has a desired or improved quick charging rate but has a significantly reduced specific capacity. Conversely, the negative electrode of Comparative Example 5, in which the content of the conductive material in the second active material layer is substantially low, has poor electrical conductivity, and thus has significantly reduced quick charging rate and specific capacity.

Meanwhile, each of the negative electrodes of Examples 1 to 5 has a desired or improved specific capacity and a desired or improved quick charging rate. In conclusion, the rechargeable battery according to embodiments of the present disclosure achieves high negative electrode specific capacity and improved electrical conductivity by substantially arranging the conductive material in the second active material layer containing silicon particles and setting an appropriate content, resulting in fast charge/discharge rate.

A negative electrode for a rechargeable lithium battery according to the present disclosure may alleviate changes in volume of a silicon-containing active material layer by disposing a silicon-containing active material layer between active material layers containing no silicon. In addition, a conductive material may be substantially disposed in the silicon-containing active material layer, resulting in improved energy density and electrical conductivity. Accordingly, a rechargeable lithium battery according to the present disclosure may have a desired or improved capacity and a desired or improved charging/discharging rate.

Although example embodiments of the present disclosure have been described above, the scope of the present disclosure is not limited to the example embodiments. Various modifications of the example embodiments may be made without departing from the scope of the disclosure as defined by the appended claims, and the modifications are included in the scope of the present disclosure.

Embodiments are set out in the following clauses:
Clause 1. A negative electrode for a rechargeable lithium battery, comprising:
   a negative electrode current collector; and
   a negative electrode active material layer on the negative electrode current collector,
   wherein the negative electrode active material layer includes a first active material layer, a second active material layer, and a third active material layer, which are sequentially stacked on the negative electrode current collector,
   the negative electrode active material layer includes a conductive material,
   the second active material layer further includes silicon-containing particles, and
   with respect to a total amount of the conductive material included in the negative electrode active material layer, a proportion of the conductive material distributed in the second active material layer is greater than a proportion of the conductive material distributed in each of the first active material layer and the third active material layer.
Clause 2. The negative electrode for a rechargeable lithium battery of clause 1, wherein the proportion of the conductive material distributed in the second active material layer is about 60% to about 80%.
Clause 3. The negative electrode for a rechargeable lithium battery of clause 1 or clause 2, wherein the proportion of the conductive material distributed in the first active material layer is about 10% to about 20%, and
   the proportion of the conductive material distributed in the third active material layer is about 10% to about 20%.
Clause 4. The negative electrode for a rechargeable lithium battery of any one of clauses 1 to 3, wherein the first active material layer comprises a first crystalline carbon, the second active material layer comprises a second crystalline carbon, and the third active material layer comprises a third crystalline carbon, and
   the first to third crystalline carbons each comprise artificial graphite, natural graphite, or a combination thereof.
Clause 5. The negative electrode for a rechargeable lithium battery of clause 4, wherein a proportion of natural graphite in the first crystalline carbon is greater than a proportion of artificial graphite, and
   a proportion of artificial graphite in the third crystalline carbon is greater than a proportion of natural graphite.
Clause 6. The negative electrode for a rechargeable lithium battery of any one of clauses 1 to 5, wherein the conductive material comprises at least one selected from the group consisting of carbon nanotube, carbon nanofiber, graphene, fullerene, metal powder, metal fiber, and conductive polymer.
Clause 7. The negative electrode for a rechargeable lithium battery of any one of clauses 1 to 6, wherein the content of the conductive material in the second active material layer is about 0.2 wt% to about 1.0 wt%.
Clause 8. The negative electrode for a rechargeable lithium battery of any one of clauses 1 to 7, wherein the silicon-containing particles comprise silicon, a silicon-carbon composite, silicon oxide, a Si-Q alloy, or a combination thereof, and
Q comprises an alkali metal, an alkaline earth metal, a Group 13 element, a Group 14 element excluding Si, a Group 15 element, a Group 16 element, a transition metal, a rare earth element, or a combination thereof.
Clause 9. The negative electrode for a rechargeable lithium battery of any one of clauses 1 to 8, wherein the first to third active material layers each further include a binder,
   the content of the binder in the second active material layer is greater than the content of the binder in the first active material layer, and
   the content of the binder in the second active material layer is greater than the content of the binder in the third active material layer.
Clause 10. The negative electrode for a rechargeable lithium battery of any one of clauses 1 to 9, wherein the content of silicon in the second active material layer is about 5 wt% to about 30 wt%.
Clause 11. A negative electrode for a rechargeable lithium battery, comprising:
   a negative electrode current collector; and
   a negative electrode active material layer on the negative electrode current collector,
   wherein the negative electrode active material layer includes a first active material layer, a second active material layer, and a third active material layer, which are sequentially stacked on the negative electrode current collector,
   the second active material layer includes silicon-containing particles,
   the first active material layer includes a first conductive material, the second active material layer includes a second conductive material, and the third active material layer includes a third conductive material,
   the content of the second conductive material in the second active material layer is greater than the content of the first conductive material in the first active material layer, and
   the content of the second conductive material in the second active material layer is greater than the content of the third conductive material in the third active material layer.
Clause 12. The negative electrode for a rechargeable lithium battery of clause 11, wherein the content of the second conductive material in the second active material layer is about 0.2 wt% to about 1.0 wt%.
Clause 13. The negative electrode for a rechargeable lithium battery of clause 11 or clause 12, wherein with respect to a total amount of the first to third conductive materials, a proportion of the first conductive material is about 10% to about 20%, a proportion of the second conductive material is about 60% to about 80%, and a proportion of the third conductive material is about 10% to about 20%.
Clause 14. The negative electrode for a rechargeable lithium battery of any one of clauses 11 to 13, wherein the first active material layer comprises a first crystalline carbon, the second active material layer comprises a second crystalline carbon, and the third active material layer comprises a third crystalline carbon, and
   the first to third crystalline carbons each comprise artificial graphite, natural graphite, or a combination thereof.
Clause 15. The negative electrode for a rechargeable lithium battery of clause 14, wherein a proportion of natural graphite in the first crystalline carbon is greater than a proportion of artificial graphite, and
   a proportion of artificial graphite in the third crystalline carbon is greater than a proportion of natural graphite.
Clause 16. The negative electrode for a rechargeable lithium battery of any one of clauses 11 to 15, wherein the first to third conductive materials each comprise at least one selected from the group consisting of carbon nanotube, carbon nanofiber, graphene, fullerene, metal powder, metal fiber, and conductive polymer.
Clause 17. The negative electrode for a rechargeable lithium battery of any one of clauses 11 to 16, wherein the silicon-containing particles comprise silicon, a silicon-carbon composite, silicon oxide, a Si-Q alloy, or a combination thereof, and
   Q comprises an alkali metal, an alkaline earth metal, a Group 13 element, a Group 14 element excluding Si, a Group 15 element, a Group 16 element, a transition metal, a rare earth element, or a combination thereof.
Clause 18. The negative electrode for a rechargeable lithium battery of any one of clauses 11 to 17, wherein the first to third active material layers each further include a binder,
   the content of the binder in the second active material layer is greater than the content of the binder in the first active material layer, and
   the content of the binder in the second active material layer is greater than the content of the binder in the third active material layer.
Clause 19. The negative electrode for a rechargeable lithium battery of any one of clauses 11 to 18, wherein the content of silicon in the second active material layer is about 5 wt% to about 30 wt%.
Clause 20. A rechargeable lithium battery comprising:
   the negative electrode according to any one of clauses 1 to 19;
   a positive electrode including a positive electrode current collector and a positive electrode active material layer on the positive electrode current collector; and
   a separator between the negative electrode and the positive electrode.

## Claims

1. A negative electrode for a rechargeable lithium battery, the negative electrode comprising:
a negative electrode current collector; and
a negative electrode active material layer on the negative electrode current collector,
wherein the negative electrode active material layer includes a first active material layer, a second active material layer, and a third active material layer stacked on the negative electrode current collector,
the negative electrode active material layer includes a conductive material,
the second active material layer includes silicon-containing particles, and
with respect to a total amount of the conductive material included in the negative electrode active material layer, a proportion of the conductive material distributed in the second active material layer is greater than a proportion of the conductive material distributed in at least one of the first active material layer and the third active material layer,
wherein the proportion of the conductive material distributed in the second active material layer is about 60% to about 80%, and
wherein the content of the conductive material in the second active material layer is about 0.2 wt% to about 1.0 wt%.

2. The negative electrode for a rechargeable lithium battery of claim 1, wherein the proportion of the conductive material distributed in the first active material layer is about 10% to about 20%, and
the proportion of the conductive material distributed in the third active material layer is about 10% to about 20%.

3. The negative electrode for a rechargeable lithium battery of claim 1 or claim 2, wherein the first active material layer comprises a first crystalline carbon, the second active material layer comprises a second crystalline carbon, and the third active material layer comprises a third crystalline carbon, and
at least one of the first crystalline carbon, the second crystalline carbon and the third crystalline carbon comprise at least one of artificial graphite and natural graphite.

4. The negative electrode for a rechargeable lithium battery of claim 3, wherein a proportion of natural graphite in the first crystalline carbon is greater than a proportion of artificial graphite therein, and
a proportion of artificial graphite in the third crystalline carbon is greater than a proportion of natural graphite therein.

5. The negative electrode for a rechargeable lithium battery of any one of claims 1 to 4, wherein the conductive material comprises at least one of carbon nanotube, carbon nanofiber, graphene, fullerene, metal powder, metal fiber, and conductive polymer.

6. The negative electrode for a rechargeable lithium battery of any one of claims 1 to 5, wherein the silicon-containing particles comprise at least one of silicon, a silicon-carbon composite, silicon oxide, and a Si-Q alloy, and
Q comprises at least one of an alkali metal, an alkaline earth metal, a Group 13 element, a Group 14 element excluding Si, a Group 15 element, a Group 16 element, a transition metal, and a rare earth element.

7. The negative electrode for a rechargeable lithium battery of any one of claims 1 to 6, wherein at least one of the first active material layer, the second active material layer, and the third active material layer further comprise a binder,
the content of the binder in the second active material layer is greater than the content of the binder in the first active material layer, and
the content of the binder in the second active material layer is greater than the content of the binder in the third active material layer.

8. The negative electrode for a rechargeable lithium battery of any one of claims 1 to 7, wherein the content of the silicon-containing particles in the second active material layer is about 5 wt% to about 30 wt%.

9. The negative electrode for a rechargeable lithium battery of any one of claims 1 to 8,
the content of the conductive material in the second active material layer is greater than the content of the conductive material in the first active material layer, and
the content of the conductive material in the second active material layer is greater than the content of the conductive material in the third active material layer.

10. A rechargeable lithium battery comprising:
the negative electrode according to any one of claims 1 to 9;
a positive electrode including a positive electrode current collector and a positive electrode active material layer on the positive electrode current collector; and
a separator between the negative electrode and the positive electrode.
